# DEMANDE DE BREVET EUROPEEN

(11) **EP 4 745 684 A1**
(43) Date de publication de la demande: **20.05.2026**
(21) Numéro de dépôt: 25200870.1
(22) Date de dépôt: 08.09.2025
(51) Int. Cl.: G04B 45/00, B23K 26/04, G04D 3/00

(54) **PROCÉDÉ DE TRAITEMENT LASER D'UN COMPOSANT HORLOGER**

(30) Priorité: 13.11.2024 EP 24212768
(71) Demandeur: Rubattel et Weyermann S.A., 2300 La Chaux-de-Fonds (CH)
(72) Inventeur: JEANRENAUD, Frédéric, 2300 La Chaux-de-Fonds (CH); DE JESUS, Stéphane, 2300 La Chaux-de-Fonds (CH); KULJANCIC, Adis, 2300 La Chaux-de-Fonds (CH); POLY, Giovanni, 25120 Maiche (FR)
(74) Mandataire: ICB SA

(57) **Abrégé**

L'invention concerne un procédé de traitement laser d'un composant horloger (10) comprenant une opération de traitement d'une surface du composant horloger (10) inscrit dans un repère XYZ orthonormé, dans laquelle un laser (20) est piloté de sorte à émettre un faisceau laser (21) et de sorte à déplacer un point focal (210) du faisceau laser (21) afin d'impacter une surface à traiter (100) du composant horloger (10) selon des instructions de commande issues d'un programme informatique, afin de respecter une stratégie de balayage comprenant une pluralité de trajectoires (31) comportant chacune une composante selon une direction Z et une composante selon au moins l'une des directions X ou Y, la stratégie de balayage étant définie de sorte que la densité d'énergie émise par le faisceau laser (21) évolue sur l'ensemble de la surface à traiter (100).

## Description

### Domaine technique de l'invention

L'invention relève du domaine de la décoration de pièces d'horlogerie.

Plus particulièrement, l'invention concerne un procédé traitement laser d'un composant horloger. A titre d'exemple, un tel composant peut constituer un cadran, une applique, une aiguille, une platine, un pont, une masse oscillante, une lunette, une carrure, ou tout autre composant visible d'une montre.

### Arrière-plan technologique

Des procédés de traitement laser de composants horlogers sont connus depuis des années. De tels procédés de traitement laser permettent de décorer la surface des composants notamment en la colorant ou en la structurant, c'est à dire en modifiant l'état de surface des composants, voire en modifiant la forme de la surface par enlèvement de matière pour réaliser des creusures, par exemple du type côtes de Genève. Les procédés de traitement laser peuvent aussi permettre l'ablation d'une couche sur une surface.

Pour la réalisation de traitements de surface, les lasers sont pilotés de sorte à émettre des séries d'impulsions d'un faisceau laser afin de déplacer un point focal du faisceau dans un plan de balayage, par rapport à la surface à traiter et en respectant une stratégie de balayage. Cette stratégie dépend du traitement de surface à réaliser et prend en compte divers paramètres du faisceau laser dont les trajectoires du point focal.

Lorsque la surface à traiter présente une géométrie complexe, par exemple si présente une forme en trois dimensions, entre deux séries d'impulsions successives, le point focal du faisceau est décalé selon une trajectoire orthogonale au plan de balayage de sorte que les séries d'impulsions soient réalisées dans des plans de balayage distincts, parallèles entre eux. Autrement dit, à chaque passe, le point focal est décalé selon une direction normale à la surface à traiter, par exemple d'une distance de l'ordre du micromètre.

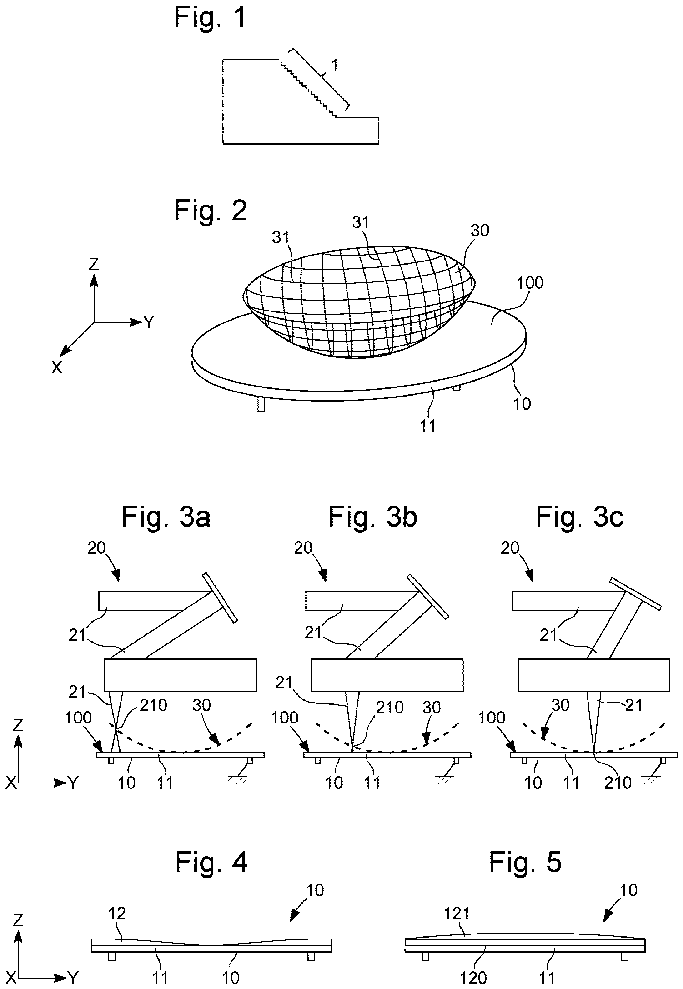

Ainsi, à l'échelle micrométrique, la surface traitée présente plusieurs niveaux d'épaisseurs différentes formant des épaulements 1, tel que visible sur la figure 1.

Ces épaulements 1 présentant une hauteur de quelques micromètres, par exemple 5 µm, sont difficilement visibles à l'œil nu, mais bien visibles à la loupe et ne sont donc pas convenables pour des composants horlogers destinés à être intégrés dans des montres haut de gamme.

Par ailleurs, les gradients de décoration, par exemple les gradients de couleur ou les gradients de structuration sont réalisés par des balayages du faisceau laser tels qu'ils génèrent des ensembles de points d'impacts répartis selon des densités différentes.

Ces points d'impacts sont visibles à l'œil nu et génèrent un effet de pixellisation du décor peu compatible avec des montres haut de gamme.

Il existe un besoin de pouvoir réaliser des traitements laser de composants horlogers dont l'aspect à l'échelle micrométrique est convenable.

### Résumé de l'invention

L'invention concerne à cet effet un procédé de traitement laser d'un composant horloger comprenant une opération de traitement d'une surface du composant horloger inscrit dans un repère XYZ orthonormé, dans laquelle un laser est piloté de sorte à émettre un faisceau laser et de sorte à déplacer un point focal du faisceau laser afin d'impacter une surface à traiter du composant horloger selon des instructions de commande issues d'un programme informatique, afin de respecter une stratégie de balayage comprenant une pluralité de trajectoires comportant chacune une composante selon une direction Z et une composante selon au moins l'une des directions X ou Y, la stratégie de balayage étant définie de sorte que la densité d'énergie émise par le faisceau laser évolue sur l'ensemble de la surface à traiter.

Grâce aux caractéristiques de l'invention, la surface à traiter du substrat peut être décoré en générant un effet de gradient de décoration, c'est-à-dire un gradient de couleur ou un gradient de structuration, sans effet de pixélisation ou sans épaulement.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, chacune des trajectoires présente une forme curviligne et/ou rectiligne.

Dans des modes particuliers de mise en œuvre, l'opération de traitement est réalisée par un laser constituant une machine-outil à commande numérique formé d'un bâti et d'une enceinte de travail dans laquelle est disposée le composant horloger sur un posage.

Dans des modes particuliers de mise en œuvre, l'opération de traitement est réalisée de sorte à générer une coloration de la surface à traiter, la variation de la densité d'énergie du faisceau laser provoquant une variation progressive et continue de la couleur de ladite surface à traiter.

Dans des modes particuliers de mise en œuvre, l'opération de traitement est réalisée de sorte à réaliser un décor par ablation d'une couche ou de plusieurs couches de matière déposées sur le substrat, la variation de la densité d'énergie du faisceau laser provoquant une évolution continue de l'épaisseur de la couche, sur la surface du substrat.

Dans des modes particuliers de mise en œuvre, la surface à traiter est la surface d'une couche métallique présentant une épaisseur comprise entre 10 nm et 20 µm, l'opération de traitement étant réalisée de sorte à réduire l'épaisseur de la couche jusqu'à ce qu'elle soit égale à quelques dizaines de nanomètres ou jusqu'à ce qu'à l'élimination de la couche.

Dans des modes particuliers de mise en œuvre, la surface à traiter est la surface d'une couche mince en oxyde de silicium, de titane, d'aluminium, à base de carbone, de chrome, d'or, d'argent, d'aluminium, de cuivre, de nickel, déposée par PVD, CVD ou ALD, de sorte à présenter une épaisseur comprise entre 10 nm et 500 nm, l'opération de traitement étant mise en œuvre de sorte que le composant horloger présente un gradient de couleur interférentielle.

Dans des modes particuliers de mise en œuvre, la surface à traiter est la surface d'une couche d'un empilement de couches minces comprenant une couche d'absorption métallique déposée sur le substrat, et une couche transparente réalisée dans un oxyde et déposée sur la couche d'absorption, l'opération de traitement étant réalisée de sorte à ablater la couche transparente de sorte à réduire localement son épaisseur afin de modifier localement une couleur interférentielle générée par l'empilement de couches minces

Dans des modes particuliers de mise en œuvre, la surface à traiter est la surface d'une couche déposée par pulvérisation présentant une épaisseur comprise entre 3 µm et 150 µm.

Dans des modes particuliers de mise en œuvre, la surface à traiter est la surface du substrat, l'opération de traitement étant mise en œuvre de sorte à structurer ladite surface de sorte à générer des décors sous la forme de reliefs présentant un aspect uniforme à l'échelle micrométrique, c'est-à-dire sans phénomène de crénelage.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement une surface traitée par laser selon un procédé de l'art antérieur, présentant plusieurs niveaux d'épaisseurs différentes formant des épaulements,
- la figure 2 représente schématiquement une vue en perspective d'un composant horloger présentant une surface à traiter par un procédé de traitement laser selon un exemple préféré de l'invention, et une surface de référence définie par une pluralité de trajectoires d'une stratégie de balayage d'un faisceau laser et du composant horloger l'un par rapport à l'autre, dans un repère XYZ,
- les figures 3a à 3c représentent une stratégie de balayage selon un exemple du procédé selon la présente invention,
- les figures 4 et 5 représentent deux composants horlogers obtenus par la mise en œuvre du procédé selon des variantes différentes.

On note que les figures ne sont pas dessinées à l'échelle pour des raisons de clarté.

### Description détaillée de l'invention

L'invention concerne un procédé de traitement laser d'un composant horloger 10. Le composant horloger 10 comporte un substrat 11 réalisé par exemple en matériau métallique, tel qu'en cuivre, acier, fer, aluminium, titane, or, argent, ou leurs alliages, ou réalisé en matériau minéral, tel qu'en céramique, saphir, aventurine, onyx, ou dans un matériau organique, tel qu'en nacre.

Le procédé selon l'invention met en œuvre un laser 20 comprenant un système optique composé de miroirs et de lentilles à travers lequel est émis un faisceau laser 21 par une source laser. Le système optique permet, de façon connue par l'homme du métier, de modifier notamment l'énergie délivrée par le faisceau laser 21, sa polarisation et sa taille. Avantageusement, le système optique comporte également un dispositif de déviation optique piloté par un module de commande électronique connu en tant que tel. Le faisceau laser 21 est émis sous la forme d'impulsions dont la durée est de l'ordre de grandeur de la nanoseconde, de la picoseconde ou de la femtoseconde.

Le laser 20 utilisé dans le cadre de la présente invention est une machine-outil à commande numérique constituée d'un bâti et d'une enceinte de travail. Le faisceau laser 21 est déplacé selon des instructions de commande d'un programme informatique préétabli selon le décor à réaliser sur le composant horloger 10. Lors de la mise en œuvre du procédé selon l'invention, le composant horloger 10 est maintenu en position sur un posage prévu à cet effet au sein de l'enceinte de travail.

L'ensemble de ces aspects est bien connu de l'homme du métier et n'est donc pas décrit plus en détail dans le présent texte. Seules les informations propres à l'invention et s'écartant des opérations de routine de l'homme du métier sont donc décrites en détail dans le présent texte.

Le procédé comprend une opération de traitement d'une surface du composant horloger 10, dans laquelle le laser 20 est piloté de sorte à émettre un faisceau laser 21 afin d'impacter une surface à traiter 100 du composant horloger 10. Lors de l'opération de traitement de surface, un point focal 210 du faisceau laser 21 est déplacé de sorte à balayer la surface à traiter 100 par le dispositif de déviation optique tel que représenté sur les figures 3a à 3c, de sorte à respecter une stratégie de balayage prédéfinie s'étendant dans un espace en trois dimensions. Comme illustré sur les figures 2 à 3c, le composant horloger est inscrit dans un repère XYZ orthonormé et s'étend dans un plan XY.

La stratégie de balayage comprend une pluralité de trajectoires 31 dans lesquelles une série d'impulsions du faisceau laser 21 est émise en continue, et dont chacune comporte une composante selon une direction Z et une composante selon au moins l'une des directions X ou Y. Par exemple, chacune des trajectoires 31 présente une forme curviligne et/ou rectiligne.

Les trajectoires 31 sont inscrites dans une surface de référence 30 s'étendant dans un espace en trois dimensions, dans le repère XYZ, comme schématiquement représenté en perspective sur la figure 2. Cette surface de référence 30 présente une forme différente de la surface à traiter 100, pour que la densité d'énergie émise par le faisceau laser 21 évolue sur l'ensemble de ladite surface à traiter 100.

Chaque trajectoire 31 correspond à un trajet du faisceau laser 21 tel que représenté sur les figures 2 à 3c, et en particulier celui du point focal 210 du faisceau laser 21, par rapport au composant horloger 10, ce dernier étant maintenu en position dans le repère XYZ, par un posage adapté. Le pilotage du déplacement du point focal 210 est connu en tant que tel par la personne du métier.

Bien entendu, il est envisageable que la stratégie de balayage définisse un balayage du faisceau laser 21 dans plusieurs directions parallèles ou dans plusieurs directions non parallèles.

La stratégie de balayage est définie lors d'une étape de programmation du programme informatique, préliminaire à l'opération de traitement de surface. La stratégie de balayage est définie de sorte que la densité d'énergie émise par le faisceau laser 21 évolue l'ensemble de la surface à traiter 100. En particulier, la stratégie de balayage dépend notamment du décor à réaliser et de la forme de la surface à traiter 100 du composant horloger 10 dans la mesure où plus le point focal 210 du faisceau laser 21 est proche de la surface à traiter 100, plus le faisceau laser 21 est concentré sur la surface à traiter 100 et donc plus le niveau d'énergie auquel elle est soumise est important.

Dans les figures 2 à 3c, la surface à traiter 100 présente une forme plane, s'étendant uniquement dans le plan XY, mais elle pourrait être de toute forme. Par ailleurs, la surface à traiter 100 peut constituer une partie ou la totalité de la surface du substrat 11 ou d'une couche 12 déposée sur le substrat 11.

A titre d'exemple, l'opération de traitement laser peut être mise en œuvre avec des paramètres du faisceau laser 21 tels que le décor réalisé est une coloration du substrat 11 ou d'une couche 12 déposée sur le substrat, une ablation d'une couche 12 ou de plusieurs couches de matière déposées sur le substrat 11, une structuration du substrat 11, etc.

Lorsque le décor réalisé est une coloration du substrat 11 ou d'une couche 12 déposée sur le substrat 11, selon que la surface à traiter 100 soit la surface du substrat 11 ou de la couche 12, la variation de la densité d'énergie du faisceau laser 21 provoque une variation progressive et continue de la couleur de la surface à traiter 100. En effet, la couleur de la surface à traiter 100 dépend alors de son matériau et du niveau d'énergie auquel elle est soumise.

Lorsque le procédé selon l'invention est mis en œuvre de sorte à réaliser un décor par ablation d'au moins une couche 12 déposée sur le substrat 11, la variation de la densité d'énergie du faisceau laser 21 provoque localement une évolution continue de l'épaisseur de la couche 12, sur la surface du substrat 11, c'est-à-dire dans le plan XY sur les figures 4 et 5 qui représentent deux exemples de mises en œuvre du procédé.

La ou les couches dont la surface est à traiter peuvent être opaques, transparentes ou semi-transparentes et peuvent être déposées par toute méthode connue, tel que par galvanoplastie, par dépôt physique en phase vapeur (PVD), dépôt chimique en phase vapeur (CVD), dépôt de couches atomiques (ALD), pulvérisation, etc.

Par exemple, la surface à traiter 100 peut être celle d'une couche 12 métallique déposée par exemple par galvanoplastie, réalisée en Au, Ag, Rh, Ru, Cu, Ni ou en Cr, et pouvant présenter une épaisseur comprise entre 10 nm et 20 µm. Des effets optiques sont alors avantageusement produits par la pente formée par l'évolution de l'épaisseur de la couche 12 générée par l'ablation de la couche, notamment la lumière incidente est reflétée de façon différente selon l'angle formée par la pente et par les éventuelles portions non impactées par le traitement laser. En outre, l'aspect du composant horloger 10 peut être mat sur une portion traitée par laser et brillant sur une portion non traitée de la couche 12, ou inversement.

Dans ce cas, dont un exemple est représenté schématiquement sur la figure 4, la variation d'épaisseur génère une variation des couleurs du composant horloger 10, dans la mesure où la couleur du substrat 11 est davantage visible à mesure que l'épaisseur de la couche 12 décroit. L'opération de traitement peut être réalisée de sorte à ablater la couche 12 pour réduire localement son épaisseur jusqu'à ce qu'elle soit égale à quelques dizaines de nanomètres ou jusqu'à ce qu'à l'élimination de la couche 12.

Naturellement, dans une variante de cet exemple, il est envisageable que la surface à traiter 100 soit celle d'un empilement d'au moins deux couches, dont une couche supérieure et une couche inférieure, l'opération de traitement étant alors réalisée de sorte à ablater la couche supérieure de faire apparaitre la couche inférieure et éventuellement de sorte à ablater la couche inférieure de sorte à faire apparaitre le substrat 11.

Dans le cas d'une ou plusieurs couches minces déposées par PVD, CVD ou ALD, elles peuvent être réalisées en oxyde de silicium, de titane, d'aluminium, à base de carbone, de chrome, d'or, d'argent, d'aluminium, de cuivre, de nickel, etc. Il est avantageusement envisageable de générer un effet interférentiel de sorte que le composant horloger 10 présente un gradient de couleur interférentielle. La ou les couches minces présentent dans ce cas une épaisseur comprise entre 10 nm et 500 nm.

Par exemple, le composant horloger 10 représenté sur la figure 5 présente un empilement de couches minces comprenant une couche d'absorption 120 métallique, par exemple réalisée dans un des métaux précités, et déposée sur le substrat 11 et une couche transparente 121 réalisée dans un des oxydes précités et déposée sur la couche d'absorption 120. La couche transparente 121 est au moins semi transparente dans le sens où elle laisse passer au moins une partie du rayonnement lumineux. La couche transparente 121 est ablatée lors de l'opération de traitement de sorte à réduire localement son épaisseur, comme visible sur la figure 5, afin de modifier localement une couleur interférentielle générée par l'empilement de couches minces.

Dans le cas d'une ou plusieurs couches 12 déposées par pulvérisation, la surface à traiter 100 peut être réalisée en résine transparente ou non, par exemple en acrylique, polyuréthane, poly-époxydes, etc., avec ou sans colorant. La ou les couches 12 présentent dans ce cas une épaisseur comprise entre 3 µm et 150 µm.

Dans un autre exemple de mise en œuvre du procédé, l'étape de traitement est réalisée de sorte que la surface à traiter 100 soit la surface du substrat 11. La surface du substrat 11 est structurée de sorte à générer des décors sous la forme de reliefs présentant un aspect uniforme à l'échelle micrométrique, c'est-à-dire un aspect sans crénelage.

Dans une variante de cet exemple de mise en œuvre du procédé, l'étape de traitement est réalisée de sorte à générer un gradient de rugosité du substrat 11, c'est-à-dire une modification progressive de l'état de surface du substrat 11.

De façon générale, quelle que soit la surface à traiter 100, grâce aux caractéristiques de l'invention, l'aspect esthétique du composant horloger 10 est parfaitement conforme aux exigences de l'horlogerie haut de gamme dans la mesure où la surface traitée ne présente pas de caractéristiques non souhaitées telles que des phénomènes de crénelage, caractérisés par des épaulements successifs tel que représenté de façon schématique sur la figure 1, ou des phénomènes de pixellisation.

De manière plus générale, il est à noter que les modes de mise en œuvre et de réalisation considérés ci-dessus ont été décrits à titre d'exemples non limitatifs, et que d'autres variantes sont par conséquent envisageables.

Par exemple, l'opération de traitement laser peut être réalisée selon plusieurs passes de balayage de la surface à traiter 100, selon un pas de balayage déterminé et selon un taux de recouvrement des impulsions déterminé, ces paramètres étant choisis selon le décor à générer sur la surface à traiter 100 et ne concernent pas en tant que telle la présente invention. Il en est de même pour la puissance du faisceau laser 21, la vitesse de balayage de la surface à traiter 100, la durée d'impulsion, la longueur d'onde du faisceau laser 21, etc.

Il est également à noter qu'avant la mise en œuvre de l'opération de traitement de surface, le substrat 11 peut avoir été structuré par un polissage, sablage, grenaillage, microbillage, soleillage, étampage, brossage, satinage, guillochage, gravage, fraisage, cerclage, perlage ou par toute autre opération de structuration.

## Revendications

1. Procédé de traitement laser d'un composant horloger (10) comprenant une opération de traitement d'une surface du composant horloger (10) inscrit dans un repère XYZ orthonormé, dans laquelle un laser (20) est piloté de sorte à émettre un faisceau laser (21) et de sorte à déplacer un point focal (210) du faisceau laser (21) afin d'impacter une surface à traiter (100) du composant horloger (10) selon des instructions de commande issues d'un programme informatique, afin de respecter une stratégie de balayage comprenant une pluralité de trajectoires (31) comportant chacune une composante selon une direction Z et une composante selon au moins l'une des directions X ou Y, la stratégie de balayage étant définie de sorte que la densité d'énergie émise par le faisceau laser (21) évolue sur l'ensemble de la surface à traiter (100).

2. Procédé selon la revendication 1, dans lequel chacune des trajectoires (31) présente une forme curviligne et/ou rectiligne.

3. Procédé selon la revendication 1 ou 2, dans lequel l'opération de traitement est réalisée par un laser (20) constituant une machine-outil à commande numérique formé d'un bâti et d'une enceinte de travail dans laquelle est disposée le composant horloger (10) sur un posage.

4. Procédé selon l'une des revendications 1 à 3, dans lequel l'opération de traitement est réalisée de sorte à générer une coloration de la surface à traiter (100), la variation de la densité d'énergie du faisceau laser (21) provoquant une variation progressive et continue de la couleur de ladite surface à traiter (100).

5. Procédé selon l'une des revendications 1 à 3, dans lequel l'opération de traitement est réalisée de sorte à réaliser un décor par ablation d'une couche (12) ou de plusieurs couches de matière déposées sur le substrat (11), la variation de la densité d'énergie du faisceau laser (21) provoquant une évolution continue de l'épaisseur de la couche (12), sur la surface du substrat (11).

6. Procédé selon la revendication 5, dans lequel la surface à traiter (100) est la surface d'une couche (12) métallique présentant une épaisseur comprise entre 10 nm et 20 µm, l'opération de traitement étant réalisée de sorte à réduire l'épaisseur de la couche (12) jusqu'à ce qu'elle soit égale à quelques dizaines de nanomètres ou jusqu'à ce qu'à l'élimination de la couche (12).

7. Procédé selon la revendication 5, dans lequel la surface à traiter (100) est la surface d'une couche mince en oxyde de silicium, de titane, d'aluminium, à base de carbone, de chrome, d'or, d'argent, d'aluminium, de cuivre, de nickel, déposée par PVD, CVD ou ALD, de sorte à présenter une épaisseur comprise entre 10 nm et 500 nm, l'opération de traitement étant mise en œuvre de sorte que le composant horloger (10) présente un gradient de couleur interférentielle.

8. Procédé selon la revendication 7, dans lequel la surface à traiter (100) est la surface d'une couche d'un empilement de couches minces comprenant une couche d'absorption (120) métallique déposée sur le substrat (11), et une couche transparente (121) réalisée dans un oxyde et déposée sur la couche d'absorption (120), l'opération de traitement étant réalisée de sorte à ablater la couche transparente (121) de sorte à réduire localement son épaisseur afin de modifier localement une couleur interférentielle générée par l'empilement de couches minces.

9. Procédé selon la revendication 5, dans lequel la surface à traiter (100) est la surface d'une couche (12) déposée par pulvérisation présentant une épaisseur comprise entre 3 µm et 150 µm.

10. Procédé selon la revendication 4, dans lequel la surface à traiter (100) est la surface du substrat (11), l'opération de traitement étant mise en œuvre de sorte à structurer ladite surface de sorte à générer des décors sous la forme de reliefs présentant un aspect uniforme à l'échelle micrométrique.
